# FASCICULE DE BREVET EUROPEEN

(11) **EP 1 344 384 B1**
(45) Date de publication et mention de la délivrance du brevet: **21.03.2007**
(21) Numéro de dépôt: 01272060.3
(22) Date de dépôt: 11.12.2001
(51) Int. Cl.: H04M 7/00, H04L 29/12, H04M 3/54, H04M 3/56

(54) **PROCEDE D'ETABLISSEMENT DE CHEMINS DE COMMUNICATION ENTRE DES POINTS D'ACCES D'UN SYSTEME DE COMMUTATION, ET SYSTEME DE COMMUTATION METTANT EN OEUVRE LE PROCEDE**
VERFAHREN ZUM EINRICHTEN VON KOMMUNIKATIONSWEGEN ZWISCHEN ZUGRIFFSPUNKTEN EINES VERMITTLUNGSSYSTEMS UND DAS VERFAHREN IMPLEMENTIERENDES VERMITTLUNGSSYSTEM
METHOD FOR SETTING UP COMMUNICATION PATHS BETWEEN ACCESS POINTS OF A SWITCHING SYSTEM, AND SWITCHING SYSTEM IMPLEMENTING SAID METHOD

(30) Priorité: 22.12.2000 FR 0016928
(43) Date de publication de la demande: 17.09.2003
(73) Titulaire: AASTRA MATRA TELECOM, 78280 Guyancourt (FR)
(72) Inventeur: MERCURIALI, Jean-Pierre, F-91400 Orsay (FR); CHEVRIER, Emmanuel, F-91470 Limours (FR)
(74) Mandataire: Loisel, Bertrand
(86) Numéro de dépôt international: PCT/FR2001/003918
(87) Numéro de publication internationale: WO 2002/052826

(56) Documents cités:
- EP-A- 0 966 145
- WO-A-01/20859
- JP-A- 10 303 990

## Description

La présente invention concerne un procédé d'établissement de communications entre des points d'accès d'un système de commutation

L'invention s'applique notamment, mais non exclusivement, à un réseau d'autocommutateurs (PABX) dans lequel des points d'accès (lignes vers des terminaux ou des bornes radio, raccordements à des réseaux ou à des lignes spécialisées...) sont organisés en grappes gérées chacune par une unité de contrôle de grappe (UCG). Chaque unité de contrôle de grappe possède une certaine autonomie pour gérer les communications ou autres fournitures de services impliquant les points d'accès qui en dépendent. En particulier, l'UCG comporte une mémoire où sont stockées des tables contenant diverses données relatives aux terminaux qui lui sont reliés et permettant notamment de gérer les facultés dont les terminaux disposent.

Cette architecture matérielle induit le concept logiciel de demi-appel. Les traitements de signalisation concernant l'établissement d'une communication (ou autre fourniture de service) à travers un point d'accès comprennent d'une part des tâches de contrôle du point d'accès pour identifier des événements (décroché, raccroché, numérotation, occupation...) issus du point d'accès et les traduire en messages du système de commutation et pour adresser diverses commandes au point d'accès (sonnerie, tonalités, affichages...), et d'autre part des tâches de gestion d'appel pour traiter les requêtes concernant le point d'accès (en fonction notamment des droits définis dans les tables) et pour superviser les tâches de contrôle du point d'accès. La signalisation relative à une communication entre plusieurs points d'accès procède par des échanges de messages entre les demi-appels concernés. Avantageusement, les tâches de gestion d'appel utilisent des messages selon des formats et protocoles standardisés dans le système de commutation, tandis que les tâches de contrôle de point d'accès assurent les traductions nécessaires pour tenir compte des spécificités propres aux différents types de terminaux ou de réseaux susceptibles d'être raccordés.

L'architecture ci-dessus est bien adaptée au cas de terminaux fixes reliés aux UCG à des adresses invariables. Le demi-appel concernant un tel terminal peut être entièrement exécuté au niveau de l'UCG à laquelle il est raccordé (UCG de référence). La demande de brevet EP-A-0 790 748 décrit une manière de l'adapter au cas de terminaux radio mobiles susceptibles d'entrer en communication au moyen de bornes radio reliées à des UCG visitées distinctes de leurs UCG de référence, l'UCG de référence d'un terminal étant généralement celle où sont stockées les données pertinentes concernant ce terminal.

Le succès des réseaux fonctionnant selon le protocole IP (« Internet Protocol », Request For Comment (RFC) 791 publiée par l'Internet Engineering Task Force (IETF) en septembre 1981) a conduit à développer des protocoles en temps réel (RTP, « Real Time Protocol » et RTCP, « Real Time Control Protocol », RFC 1889, IETF, janvier 1996) capables de supporter du trafic de téléphonie. On dispose maintenant de terminaux de téléphonie qui se raccordent à de tels réseaux (« terminaux IP »). Ces terminaux IP peuvent notamment prendre la forme de téléphones classiques associés à des adaptateurs appropriés, de terminaux téléphoniques raccordables directement au réseau IP (par exemple « Webphone »), ou encore de micro-ordinateurs équipés de logiciels de téléphonie (par exemple « Netmeeting » commercialisé par la société Microsoft).

Le succès des réseaux IP suggère d'autre part de les utiliser dans le domaine de la commutation, et plus particulièrement dans le domaine de la commutation d'entreprise, pour relier entre elles différentes entités du système de commutation. Le réseau local IP d'une entreprise (Intranet) peut ainsi servir à interconnecter des autocommutateurs distincts. En outre, un réseau IP peut avantageusement fournir un moyen de liaison pour des terminaux IP, de sorte que l'on peut envisager la mise en oeuvre de systèmes de communication de voix et données fonctionnant entièrement selon le protocole IP. Les terminaux IP sont alors gérés par des serveurs d'appels directement connectés au réseau IP. La demande de brevet français n° 00 08897 décrit un exemple d'architecture de tels systèmes.

La coexistence des deux architectures évoquées ci-dessus est rendue indispensable par la nécessaire prise en compte des infrastructures actuelles dans le processus de migration vers des réseaux fonctionnant entièrement selon le protocole IP.

Dans une architecture combinant des réseaux de PABX du type indiqué ci-dessus et des réseaux à commutation de paquets, certaines des UCG ("UCG passerelle") sont alors équipées d'interfaces passerelles avec un réseau à commutation de paquets tel qu'un réseau IP. Ces interfaces passerelles effectuent la conversion des flux échangés entre les deux types de réseau, de manière conforme au fonctionnement d'une passerelle de média ("Media GateWay", ou MGW) et de son contrôleur ("Media Gateway Controller" ou MGC) comme décrit dans le projet TIPHON ("Telecommunications and Internet Protocol Harmonisation Over Networks) de l'ETSI ("European Telecommunication Standard Institute"). Une telle interface passerelle fournit un point d'accès connecté au réseau IP, et permet d'autre part la mise en oeuvre de communications sur le réseau IP faisant intervenir des terminaux « classiques », analogiques ou numériques, qui ne sont pas directement raccordés au réseau IP, sans toutefois comprendre obligatoirement un point d'accès pour ces terminaux "classiques". A l'inverse, une MGW fournit typiquement un point d'accès pour différents types de terminaux "classiques", et comprend un point d'accès connecté au réseau IP.

Il est ainsi possible d'envisager l'établissement de chemins de communication entre tous types de terminaux portés ou non par le réseau IP. La demande de brevet PCT/FR00/02740 décrit une manière d'optimiser l'établissement du chemin de communication lorsqu'intervient une interface passerelle avec un réseau IP.

Le choix du chemin de communication peut être effectué sur requête par un serveur de topologie, en fonction de critères propres au système, et des informations de localisation des terminaux impliqués dans la communication.

Ce processus, lorsqu'il conduit à l'établissement d'un chemin de communication entre le réseau de PABX et le réseau à commutation de paquets, utilise des ressources de l'UCG passerelle en cours de communication.

Une telle flexibilité engendre toutefois des contraintes de coût, notamment dans la perspective d'un accroissement rapide du trafic sur les réseaux à commutation de paquets. En effet, le nombre important de terminaux classiques installés sur des réseaux traditionnels existants bénéficiant d'une mise à jour avec des interfaces vers des réseaux de transmission de paquets permet de prévoir une utilisation massive d'interfaces passerelles, de sorte qu'il est souhaitable d'optimiser les systèmes de commutation en vue d'une utilisation optimale de ces passerelles, dont le coût unitaire est relativement élevé.

Par exemple, la possibilité d'effectuer des appels multiples simultanés à partir d'un même terminal, classique ou IP, peut conduire à la réservation de plusieurs passerelles, chacune pour un appel simple, alors que l'utilisateur n'en utilisera qu'une seule à un instant donné. Cet exemple est notamment celui des postes d'opératrice dans un système de commutation. Les documents JP 10303990 et EP 0966145 concernent l'établissement de chemins de communication entre deux terminaux appartenant respectivement à un réseau de transmission de paquets et à un réseau commuté public par une passerelle qui dispose d'un ensemble de ports IP, constituant une ressource, partagée, qui sont affectés à une communication pour la durée de celle-ci.

Un but de la présente invention est d'optimiser l'utilisation des ressources mobilisées par des communications dans des réseaux utilisant des passerelles du genre indiqué ci-dessus.

L'invention propose ainsi un procédé d'établissement de chemins de communication entre des points d'accès d'un système de commutation, le système de commutation comprenant un réseau de transmission de paquets procurant une première famille de points d'accès, des moyens de commutation équipés d'interfaces de raccordement procurant une seconde famille de points d'accès et d'au moins une interface passerelle avec le réseau de transmission de paquets, et des moyens de traitement d'appel pour mémoriser des données de configuration et des données de contexte relatives à des terminaux reliés au système à travers les points d'accès, et pour effectuer des traitements de signalisation concernant lesdits terminaux. L'établissement d'un premier chemin de communication entre des points d'accès pour mettre en liaison des premier et second terminaux respectivement reliés auxdits points d'accès comprend les étapes suivantes lorsque le premier chemin comporte au moins une première portion appartenant au réseau de transmission de paquets et une seconde portion appartenant aux moyens de commutation avec une interface passerelle entre lesdites première et seconde portions :
- associer à ladite première portion une ressource d'adressage de l'interface passerelle dans le réseau de transmission de paquets pour la liaison avec le premier terminal ;
- associer à ladite seconde portion une ressource d'adressage de l'interface passerelle dans les moyens de commutation pour la liaison avec le second terminal ; et
- mémoriser, dans les données de contexte relatives au second terminal, une identification de ladite ressource d'adressage de l'interface passerelle dans le réseau de transmission de paquets.

Ainsi, le second terminal pourra présenter une « double apparence » vis-à-vis des autres points d'accès du système, à savoir l'apparence native de son point d'accès, et l'apparence complémentaire correspondant à l'autre famille de point d'accès. Cette apparence complémentaire est réalisée en mémorisant dans les données de contexte du terminal une ressource d'adressage d'une passerelle qui lui est associée lors de l'établissement du premier chemin de communication.

Le traitement d'appel exécuté pour un autre terminal devant entrer en communication avec lui pourra ainsi choisir, parmi ces deux apparences, celle qui permet l'utilisation la plus judicieuse des ressources des passerelles.

En particulier, pour mettre en liaison le second terminal avec un troisième terminal sans couper la liaison avec le premier terminal, les moyens de traitement d'appel peuvent lire dans les données de contexte relatives au second terminal l'identification mémorisée de ladite ressource d'adressage de l'interface passerelle dans le réseau de transmission de paquets, et établir un second chemin de communication incluant la seconde portion du premier chemin et au moins une autre portion appartenant au réseau de transmission de paquets, à laquelle ils associent la ressource d'adressage lue de l'interface passerelle pour la liaison avec le troisième terminal.

Le processus est symétrique, de sorte que, de façon alternative ou cumulative, l'établissement du premier chemin de communication peut comprendre la mémorisation, dans les données de contexte relatives au premier terminal, d'une identification de ladite ressource d'adressage de l'interface passerelle dans les moyens de commutation.

Un autre aspect de la présente invention se rapporte à un système de commutation comprenant un réseau de transmission de paquets procurant une première famille de points d'accès, des moyens de commutation équipés d'interfaces de raccordement procurant une seconde famille de points d'accès et d'au moins une interface passerelle avec le réseau de transmission de paquets, et des moyens de traitement d'appel pour mémoriser des données de configuration et des données de contexte relatives à des terminaux reliés au système à travers les points d'accès, et pour effectuer des traitements de signalisation concernant lesdits terminaux conformément à un procédé tel que défini ci-dessus.

D'autres particularités et avantages de l'invention apparaîtront dans la description ci-après d'exemples de réalisation non limitatifs, en référence aux dessins annexés, dans lesquels :
- la figure 1 est un schéma d'un système de commutation selon l'invention ;
- la figure 2 est un schéma synoptique d'une unité de contrôle de grappe du système de la figure 1 ; et
- les figures 3 à 7 sont des diagrammes illustrant des exemples de signalisation d'appel dans le système de la figure 1.

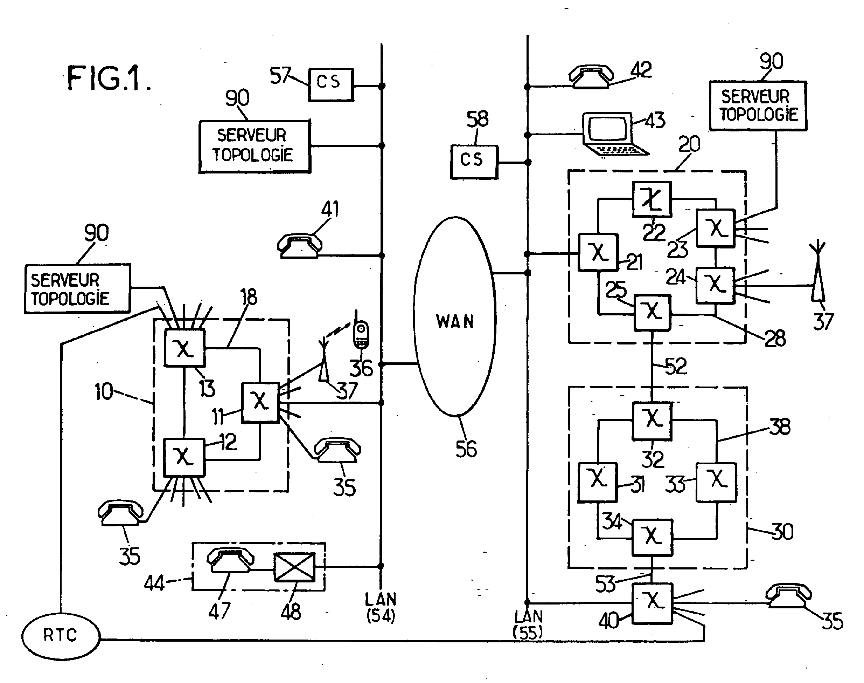

La figure 1 montre un exemple de système de communication construit à partir d'un réseau IP constitué de deux réseaux locaux (LAN, « Local Area Network ») 54, 55 reliés entre eux par l'intermédiaire d'un réseau étendu (WAN, « Wide Area Network ») 56. Le WAN joue le rôle d'interconnexion entre les sous-réseaux 54, 55 formés par les LAN. Il pourrait être avantageusement remplacé par un réseau dorsal ("backbone") si les contraintes de charge du système le justifiaient.

Le système intègre d'autre part un ou plusieurs autocommutateurs (PABX) ou sites 10, 20, 30, 40. Chaque site a une organisation en grappes. Il comprend ainsi une ou plusieurs unités de contrôle de grappe (UCG) 11-13, 21-25, 31-34, 40. Chaque UCG possède des ressources suffisantes pour supporter les communications entre ses propres points d'accès.

Chaque site 10, 20, 30 comportant plusieurs UCG est équipé d'une boucle de transport 18, 28, 38 permettant les échanges inter-UCG de manière à supporter les communications entre plusieurs points d'accès appartenant à un même site. A titre d'exemple, la boucle 18, 28, 38 peut être une ligne numérique à 40 Mbits/s organisée en temps partagé pour supporter 512 canaux à commutation de circuits (« canaux circuits ») et 70 canaux à commutation de paquets (« canaux paquets »). Les canaux circuits sont prévus pour les points d'accès dont le fonctionnement requiert la réservation d'une ressource circuit, tandis que les canaux paquets sont prévus pour les points d'accès utilisés par des communications à commutation de paquets et pour les échanges de commandes propres au système de commutation (notamment les fonctions de signalisation). Des unités de contrôle non représentées sont prévues dans les sites 10, 20, 30 pour superviser le fonctionnement des boucles de transport 18, 28, 38. Lorsque le système comporte plusieurs sites, des lignes inter-sites 52, 53 (par exemple des lignes MIC privées ou louées à un opérateur public) sont éventuellement prévues entre certaines de leurs UCG 25, 32, 34, 40.

Différents terminaux IP 41-44 sont directement connectés aux LAN 54, 55. Un terminal IP 44 peut être un téléphone classique 47 associé à un adaptateur 48 pour le raccordement au réseau IP, un terminal téléphonique 41, 42 incorporant une interface IP ou encore un micro-ordinateur 43 exécutant une application de téléphonie sur réseau IP. D'une manière connue en soi, l'adaptateur 48 peut consister en une passerelle de média (MGW), éventuellement pilotée par un contrôleur de passerelle de média (MGC) (non représenté sur la figure) supportant des protocoles tels que Megaco (voir « Megaco Protocol », Internet draft, IETF, 21 février 2000).

Dans l'exemple représenté, chaque unité de contrôle de grappe comporte un ensemble de points d'accès au système, qui peuvent servir d'interface avec différents types de lignes, selon les compatibilités désirées. On peut notamment prévoir des points d'accès pour le raccordement de terminaux de téléphonie classiques (c'est-à-dire non IP) 35, analogiques (terminaux S63 simples ou terminaux « intelligents ») ou numériques (terminaux X.25, RNIS...). Pour les communications extérieures, une ou plusieurs UCG 13, 40 peuvent d'autre part comporter des interfaces pour le raccordement à des réseaux extérieurs tels qu'un réseau téléphonique commuté (RTC) 50, un réseau numérique à intégration de services (RNIS) et/ou un réseau numérique à commutation de paquets (X.25). Pour éventuellement permettre des communications avec des terminaux mobiles 36 (par exemple CT2 ou DECT), certaines UCG peuvent comporter des points d'accès radio reliés à des bornes radio respectives 37. Dans ce cas un tel point d'accès est de type « classique ». Si la borne est reliée au système par l'intermédiaire du réseau IP, le point d'accès correspondant sera de type IP.

Certaines UCG 11,21,40, dites UCG passerelles, sont aussi connectées aux LAN 54, 55. Chaque UCG passerelle est pourvue d'une ou plusieurs interfaces passerelles ayant chacune une adresse déterminée dans le réseau IP. Dans l'exemple représenté, les sites 10, 20 et 40 sont respectivement reliées aux LAN 54, 55 et 55 par leurs UCG passerelles 11, 21 et 40.

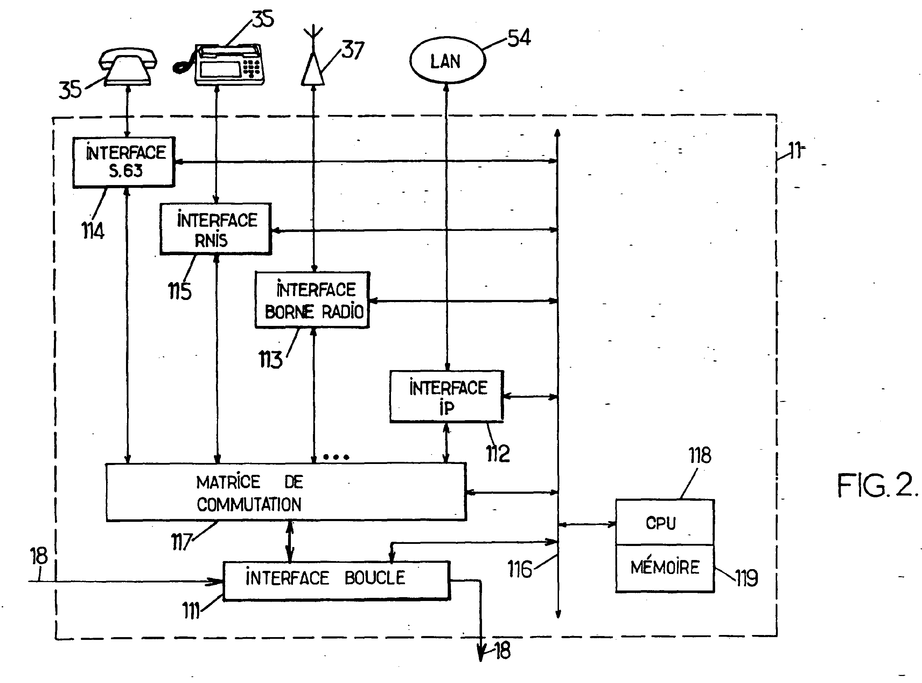

La figure 2 est un schéma de principe d'une UCG passerelle 11, qui comprend un ensemble de points d'accès, ainsi que le cas échéant, une interface 111 avec la boucle de transport 18 du site. L'UCG 11 incorpore des points d'accès pour terminaux analogiques 32, RNIS 34 et pour le raccordement de bornes radio 37, ainsi qu'un point d'accès passerelle pour le raccordement au LAN 54. L'interface 111 avec la boucle de transport 18 du site consiste par exemple en des répéteurs pour retransmettre les trames circulant sur la boucle 18, associés à un automate de séparation des canaux paquets et des canaux circuits et à des mémoires tampon pour l'extraction et l'insertion des signaux concernant l'UCG.

Chaque point d'accès d'une UCG 11 comporte une interface physique 112-115, qui assure les fonctions physiques de signalisation (détection d'événements, commandes, ...), de traduction et de mise en forme nécessaires à la compatibilité des organes raccordés aux points d'accès avec les formats utilisés dans le système de commutation.

Chacune des interfaces 111-115 est reliée au bus 116 d'un processeur 118 associé à une mémoire 119. Elles sont d'autre part reliées à une matrice de commutation 117, qui opère une commutation physique, sous le contrôle du processeur 118, entre des canaux multiplexés dans le temps conformément à un schéma de multiplexage propre à l'UCG. Le processeur 118 assure notamment les traitements de signalisation concernant les points d'accès de l'UCG : il est informé des événements détectés par les interfaces 111-115 et effectué les traitements appropriés pour configurer la matrice de commutation 117, adresser des messages de signalisation vers l'interface 111 et des commandes aux interfaces physiques 112-115.

L'interface IP 112 est reliée au LAN 54, à une adresse IP allouée à l'UCG passerelle. Sous cette adresse, elle utilise un ou plusieurs ports logiques TCP (« Transmission Control Protocol », RFC 793, IETF, septembre 1981) pour les échanges de signalisation, et des ports logiques UDP (« User Datagram Protocol », RFC 768, IETF, août 1980) pour les différentes sessions RTP-RTCP ouvertes pour transporter de la parole codée. Les ports RTP/UDP sont associés à des modules de traduction reliés à la matrice de commutation 117.

Les terminaux IP 41-44 sont avantageusement gérés par deux serveurs d'appel 57, 58 directement connectés au réseau IP 54-56 selon des protocoles normalisés, par exemple conformément à la norme H.323 de l'UIT (Union Internationale des Télécommunications), directement ou par l'intermédiaire de serveurs proxy (voir la demande de brevet français n°00 05824). Il pourrait aussi y avoir un seul serveur d'appel pour l'ensemble du réseau IP. Dans un second mode de réalisation de l'invention, chacun de ces serveurs d'appel correspond au serveur d'appel d'une UCG passerelle 11, 21, 40. De telles UCG servent alors d'UCG de référence pour des terminaux IP, qui ne connaissent a priori que l'adresse IP de l'interface passerelle de leur UCG de référence, à laquelle ils adressent leurs requêtes, et dont l'interface passerelle relaie ensuite, le cas échéant en fonction de la configuration du chemin de communication les signaux de voix vers la destination. A l'inverse, dans un troisième mode de réalisation de l'invention, les terminaux classiques 35-36, qui ne peuvent atteindre le réseau IP qu'à travers les PABX 10, 20, 30, 40, peuvent être rattachés à un serveur d'appel situé sur le réseau IP. Il suffit pour cela que les UCG relaient la signalisation entre ces terminaux et des interfaces passerelles. A la limite, un seul serveur d'appel sur le réseau IP pourrait être utilisé pour tous les terminaux.

Un terminal raccordé au réseau IP ne connaît a priori que l'adresse IP de son serveur d'appel, et il adresse ses requêtes à ce serveur. Un terminal raccordé au réseau de PABX connaît quant à lui son UCG de référence, qu'il sait toujours joindre (par l'intermédiaire des canaux paquets du réseau de PABX).

Dans la suite de la présente description, on suppose, sans que ceci soit limitatif, qu'un terminal IP peut émettre et recevoir de la parole codée selon les normes UIT-T G.729 (Codage à 8 kbit/s par prédiction linéaire avec excitation par séquences codées à structure algébrique conjuguée - CS-ACELP), UIT-T G.723.1 (compression par codage prédictif à 6,4 ou 5,3 kbit/s), et éventuellement UIT-T G.711 (codage PCM à 64 kbit/s), et que la transmission de parole au sein des sites PABX, entre les sites PABX et les terminaux classiques 35 et entre les PABX et les bornes radio 37 est sous la forme G.711. Ainsi l'interface passerelle 112 est agencée pour effectuer un transcodage G.711/G.723.1 ou G.711/G.729 lorsque c'est requis pour un terminal IP fonctionnant en G.723.1 ou G.729.

Deux utilitaires logiciels, le GIC (Gestionnaire d'Inter Communications) et le GCC (Gestionnaire de Chemin de Communication), effectuent, sur sollicitation des tâches de traitement d'appel, la gestion des canaux de signalisation et des chemins de communication, respectivement. Pour l'émission et la réception de ses messages, le traitement d'appel s'adresse au GIC sous forme de primitives. Par des mécanismes d'adressage connus en soi (adressage point à point, diffusion, diffusion sélective, etc.), il est possible d'atteindre un, plusieurs, ou tous les serveurs d'appels du système. En liaison avec le système opérationnel du serveur d'appel sur lequel il est implanté, le GIC gère l'acheminement des messages. Pour la prise/libération et la connexion/déconnexion du chemin de communication, le traitement d'appel s'adresse au GCC également sous forme de primitives. Lorsqu'il s'agit de réserver un chemin, les utilitaires GCC des deux demi-appels dialoguent directement entre eux.

Un demi-appel concernant un terminal comporte la création d'une tâche dite Moniteur d'Appel Simple (T_MAS) dans un serveur d'appel associé au terminal, qu'il soit intégré à une UCG d'un PABX ou non. Cette tâche T_MAS réalise toutes les fonctions d'analyse et de décision (acheminement d'appel, demande de faculté, etc.) intervenant dans la gestion d'appel. Pour ces fonctions, la tâche T_MAS consulte des tables stockées dans le serveur d'appel, contenant notamment l'association entre le numéro d'annuaire du terminal et une adresse IP correspondante, à laquelle ce terminal peut être atteint. Cette adresse peut être l'adresse IP propre du terminal s'il est de type IP, ou l'adresse IP d'une interface passerelle sinon. Ces tables définissent en outre les droits de l'utilisateur.

Dans la suite de la description, on considèrera que lorsqu'un serveur d'appel, associé à un terminal, est intégré à une UCG d'un PABX 10, 20, 30, 40, ce serveur se trouve dans l'UCG de référence du terminal. Ainsi, chaque terminal téléphonique 35-36 directement raccordé au réseau de PABX a une UCG de rattachement (UCG de référence) qui, dans le cas d'un terminal filaire, est typiquement celle à laquelle il est raccordé. Cette UCG de rattachement assure notamment les traitements de signalisation concernant les terminaux.

Chaque terminal du système est géré par un serveur d'appel, organisé selon les différentes possibilités exposées ci-dessus, qui dispose d'une information de localisation relative à chaque terminal supervisé. Cette information de localisation consiste en l'identification d'une UCG du réseau de PABX, dite "UCG référence de topologie". L'UCG référence de topologie coïncide avec l'UCG de référence, le cas échéant. Lorsqu'aucune UCG de référence n'est attachée à un terminal raccordé à un point d'accès du réseau IP, l'UCG référence de topologie est aussi choisie parmi les UCG passerelles raccordées au même sous-réseau que le terminal. Dans le cas représenté sur la figure 1, l'UCG passerelle 11 est par exemple l'UCG référence de topologie des terminaux IP 41 et 44 reliés au LAN 54, tandis que l'UCG passerelle 21 est l'UCG référence de topologie des terminaux IP 42 et 43 reliés au LAN 55.

Comme on l'a vu précédemment, le serveur d'appel d'un terminal raccordé à un point d'accès du réseau IP peut être, dans le second mode de réalisation de l'invention, le serveur intégré à l'une des UCG du réseau de PABX, dite UCG de référence du terminal, auquel cas l'ensemble des terminaux du système a une UCG de référence. L'UCG de référence d'un terminal raccordé à un point d'accès du réseau IP coïncide alors de préférence avec l'UCG de référence du terminal. Chaque terminal IP mémorise l'adresse dans le réseau IP d'une interface passerelle de son UCG de référence, à laquelle il adresse toutes ses requêtes.

A titre d'exemple, la signalisation est transmise sur le réseau IP conformément à la norme UIT-T H.323 dans des sessions du protocole de transport TCP établies entre deux serveurs d'appel ou entre un terminal IP et son serveur d'appel. Dans le second mode de réalisation de l'invention, l'UCG passerelle joue alors, vue du réseau IP, un rôle de « gatekeeper » au sens de H. 323.

Une autre possibilité est de coder des mires de présentation définies pour le système de commutation au moyen d'un langage de description de page tel que XML (« eXtended Markup Language »), comme décrit dans la demande de brevet WO 00/70844. Si le terminal est adapté à ce type de présentation, il affiche les mires propres au système décrites dans les messages XML construits par son interface passerelle, et il peut fournir les informations de signalisation requises en réponse à ces messages.

Différents types de modules logiciels sont utilisés pour effectuer les traitements de signalisation. Un demi-appel comporte ainsi la création d'une tâche T _MGC qui réalise les fonctions d'interface avec la tâche T_MAS du serveur d'appel, tandis qu'une tâche T_MGW gère les détails spécifiques à chaque type de point d'accès. Ainsi, la tâche T_MAS exécutée dans le serveur d'appel ne manipule que des équipements terminaux identifiés par des adresses IP et/ou des numéros d'annuaire.

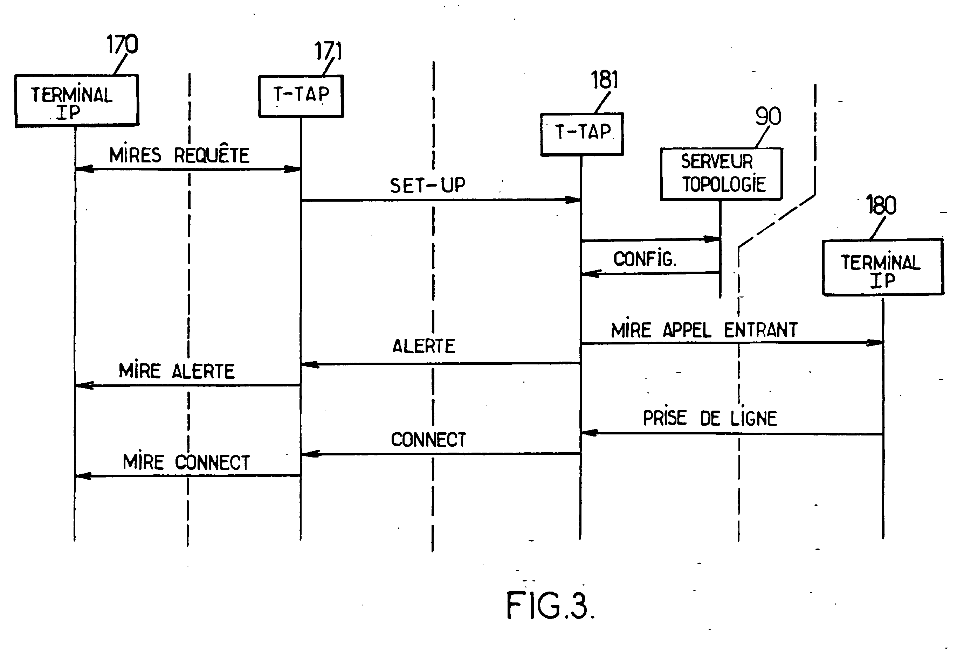

Dans les diagrammes des figures 3 à 7, on considère l'établissement de chemins de communication entre deux terminaux, l'un demandeur (« dr ») et l'autre demandé (« dé »). On observera que le scénario d'appel est essentiellement le même lorsque l'un des points d'accès concernés est relié à un réseau externe au système et non à un terminal : le correspondant extérieur pourra être demandeur ou demandé, et le demi-appel correspondant sera typiquement exécuté dans l'UCG équipée de l'interface de raccordement au réseau extérieur.

Chaque demi-appel concernant un terminal implique l'exécution d'une tâche de traitement d'appel (T_TAP), qui regroupe les tâches T_MAS et T_MGC/T_MGW précitées. Selon l'architecture des serveurs d'appel, ces tâches T_MAS et T_MGC/T_MGW peuvent être exécutées au niveau d'entités différentes communiquant entre elles selon des protocoles appropriés. C'est par souci de clarification de la présentation des scénarios d'appel qu'on illustre l'invention dans le cas particulier où l'ensemble de la tâche T_TAP est exécuté dans une UCG de référence, ce qui évite de faire la distinction entre T_MAS, T_MGC et T_MGW. La partie gauche de chaque diagramme correspond au demi-appel demandeur, et la partie droite au demi-appel demandé.

Chaque scénario d'appel représenté commence par un échange d'informations entre le terminal demandeur 70, 170 et la tâche T_TAP 71, 171 qui lui correspond. Cette tâche T_TAP a par exemple été créée par le serveur d'appel du terminal demandeur 70, 170 à réception d'un message signalant la prise de ligne par ce terminal. Elle adresse au terminal les mires codant les informations à présenter à l'utilisateur (affichages, tonalités, ...), et récupère les données fournies par l'utilisateur pour définir sa requête (choix de fonctions, numérotation, ...). Lorsque l'échange avec le terminal demandeur 70, 170 lui permet de disposer d'informations suffisantes, la tâche T_TAP 71, 171 diffuse dans le système un message d'établissement (SET_UP) comportant notamment les éléments suivants :
- le numéro d'annuaire du terminal demandeur 70, 170 ;
- le numéro d'annuaire du terminal demandé 80, 180, défini directement ou indirectement par l'utilisateur du terminal demandeur 70, 170 ;
- la localisation du terminal demandeur 70, 170 dans le système, à savoir le numéro de site de l'UCG référence de topologie et le numéro de cette UCG dans le site ;
- le type de raccordement du terminal demandeur, figurant dans les tables de son UCG de référence dont le serveur d'appel exécute la tâche T_TAP 71, 171 ; cet élément permet en particulier de distinguer les terminaux « classiques » des terminaux IP.

Pour un terminal demandeur de type classique, le message d'établissement comporte encore un numéro d'équipement physique désignant l'interface du site à laquelle le terminal est relié. Dans certains cas, il comporte en outre l'adresse IP d'au moins une interface passerelle d'une UCG temporairement associée au terminal dans le réseau 54-56 et deux numéros de ports UDP réservés sous cette interface pour ce terminal, l'un dédié à la transmission de parole selon le protocole RTP et l'autre à la transmission des informations de contrôle selon le protocole RTCP.

Pour un terminal demandeur de type IP, le message d'établissement comporte une indication des codages et des débits avec lesquels il est compatible (dans l'exemple simplifié évoqué précédemment, G.711 seulement, G.711 + G.723.1, G.711 + G.723.1 + G.729 ou G.711 + G.729), l'adresse IP du terminal dans le réseau 54-56, un numéro de port UDP qu'il consacre à la transmission de parole selon le protocole RTP et un autre numéro de port UDP pour la transmission des informations de contrôle selon le protocole RTCP.

Les serveurs d'appel vers lesquels ce message est diffusé analysent le numéro du terminal demandé. Le seul serveur qui prend en compte le message, en créant une tâche T_TAP 81, 181 de traitement du demi-appel côté arrivée, est le serveur d'appel qui supervise le terminal demandé. Cette tâche 81, 181 interroge un serveur de topologie 90 pour déterminer une configuration de l'appel.

Dans l'exemple représenté sur la figure 1, le système comporte trois serveurs de topologie 90, dont deux sont reliés à des points d'accès, respectivement de l'UCG 13 du site 10 et de l'UCG 23 du site 20, et le troisième directement au réseau IP 54-56. Ces serveurs contiennent essentiellement les mêmes données. L'un d'entre eux est sélectionné par la tâche de traitement d'appel en cours d'exécution,. On notera que de nombreuses autres implémentations seraient possibles, par exemple prévoir un seul serveur de topologie ou davantage, ou encore réaliser le serveur de topologie sous forme de tables simplement mémorisées dans chaque serveur d'appel susceptible de l'interroger.

Le serveur de topologie 90 est interrogé sur la base de deux jeux de paramètres, l'un relatif au terminal demandeur 70, 170 et l'autre relatif au terminal demandé 80, 180. Chaque jeu de paramètres relatif à un terminal comprend :
- le type de raccordement du terminal (IP ou classique) ;
- la localisation dans le système (numéros de site de l'UCG référence de topologie et numéro de cette UCG dans le site) ;
- pour un terminal de type IP, l'indication des codages et des débits avec lesquels il est compatible.

Pour le terminal demandeur, ces paramètres sont obtenus par la tâche T_TAP 81, 181 dans le message d'établissement reçu. Pour le terminal demandé, ils sont lus dans les données propres au terminal stockées dans le serveur de l'UCG, au moyen du numéro d'annuaire obtenu dans le message d'établissement reçu.

Le serveur de topologie reçoit des requêtes émises par la tâche de traitement d'appel du côté arrivée (demandé) en réponse à la réception du message d'établissement de communication (SET-UP).

La configuration d'appel désignée par le serveur de topologie 90 en réponse à son interrogation conduit dans certains cas à l'établissement d'un chemin de communication empruntant le réseau IP, y compris lorsque l'un des terminaux demandeur et demandé est de type classique. A l'inverse, le serveur de topologie peut être amené à requérir l'établissement d'un chemin de communication porté par le réseau de sites PABX, y compris lorsque l'un des terminaux demandeur et demandé est de type IP.

L'invention prévoit la possibilité pour chaque terminal de présenter, outre son typé natif, un type complémentaire (IP pour un terminal classique, et classique pour un terminal natif IP).

La présentation de cette double apparence peut intervenir a priori, c'est-à-dire préalablement à la demande d'établissement de l'appel du côté demandeur. Elle peut aussi intervenir sur demande, c'est-à-dire pour servir une configuration d'appel retenue par le serveur de topologie.

Au moment où la présentation de l'apparence IP est décidée pour un terminal classique, la tâche traitement d'appel de l'UCG de référence du terminal consulte une table de désignation de passerelles 92 pour identifier une passerelle permettant d'atteindre le terminal.

La table 92 est construite lors de la configuration du système. Elle fait correspondre à chaque unité de contrôle de grappe 11-13, 21-25, 31-34, 40 une UCG passerelle (voire plusieurs) dont l'interface passerelle peut, d'après la configuration du système, entrer en liaison avec les points d'accès de ladite unité de contrôle de grappe sans passer par le réseau IP. La table 92 peut par exemple être mémorisée dans chaque UCG, afin de pouvoir être consultée dans le traitement de chaque demi-appel. Lors de la mise en place d'une nouvelle passerelle vers le réseau IP, celle-ci diffuse sur le réseau IP, à destination de toutes les UCG, sa localisation (site, UCG) ainsi que la localisation (site, UCG) de chaque UCG à laquelle elle a accès à l'intérieur du système de PABX sans passer par le réseau IP. En variante, la table des passerelles 92 pourrait être stockée dans un serveur accessible au sein des PABX ou sur le réseau IP.

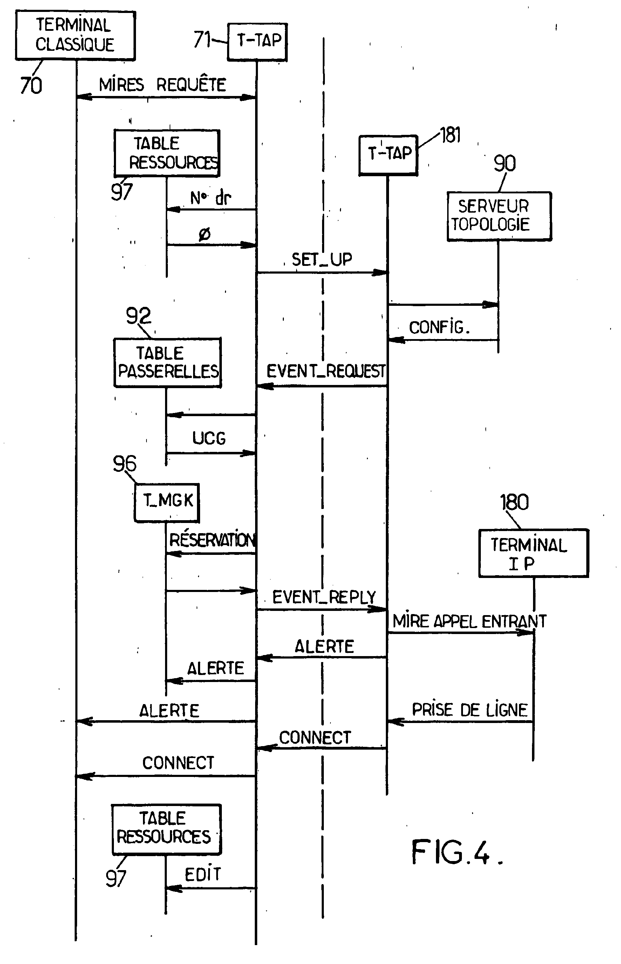

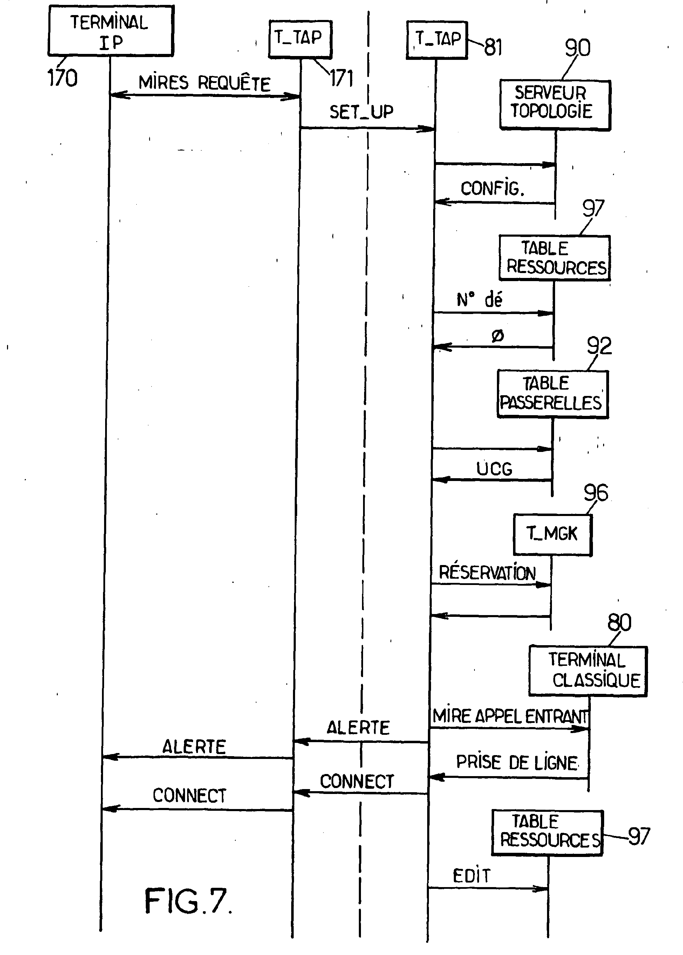

La tâche de traitement d'appel de l'UCG de référence du terminal classique peut ainsi obtenir une liste de localisations (numéro de site, numéro d'UCG dans le site) d'UCG passerelles appropriées afin de pouvoir présenter l'apparence IP. De préférence, on privilégie les UCG passerelles accessibles de l'UCG de référence sans passer par le réseau IP, et en particulier les UCG passerelles appartenant au même site que l'UCG de référence, s'il en existe. La tâche T_TAP émet alors un autre message d'établissement (SET_UP), qu'elle dirige vers la ou les UCG désignées par la table des passerelles 92. A réception de ce message, la tâche 96 de gestion d'organe passerelle (T_MGK) exécutée par le processeur d'une UCG passerelle concernée examine si l'interface passerelle dispose de ressources pour la communication en cours d'établissement (figures 4 et 7). Dans l'affirmative, elle réserve deux numéros de port UDP pour les liaisons RTP et RTCP, et répond à la tâche de traitement d'appel T_TAP en retournant le numéro d'équipement physique de l'interface passerelle disponible, son adresse IP dans le réseau et les deux numéros de port UDP réservés.

Le serveur d'appel du terminal classique présentant l'apparence IP inscrit alors ces paramètres en mémoire 119 dans une table des ressources 97, afin que ces paramètres puissent être à nouveau utilisés dans l'hypothèse d'un ou de plusieurs appels établis alors que le premier appel, ayant conduit à la réservation de ces ressources, est encore en cours. Dès lors qu'un terminal « classique » participe à un appel dont la configuration nécessite la réservation de ressources de chemin de communication sur le réseau IP lui donnant temporairement une apparence de terminal IP, un unique jeu de paramètres (adresse IP de passerelle, ports UDP) est ainsi conservé dans la table 97 et utilisé jusqu'à suppression du dernier contexte d'appel pour ce terminal. Un tel terminal présente ainsi une double apparence, l'une native (classique), et l'autre virtuelle (IP).

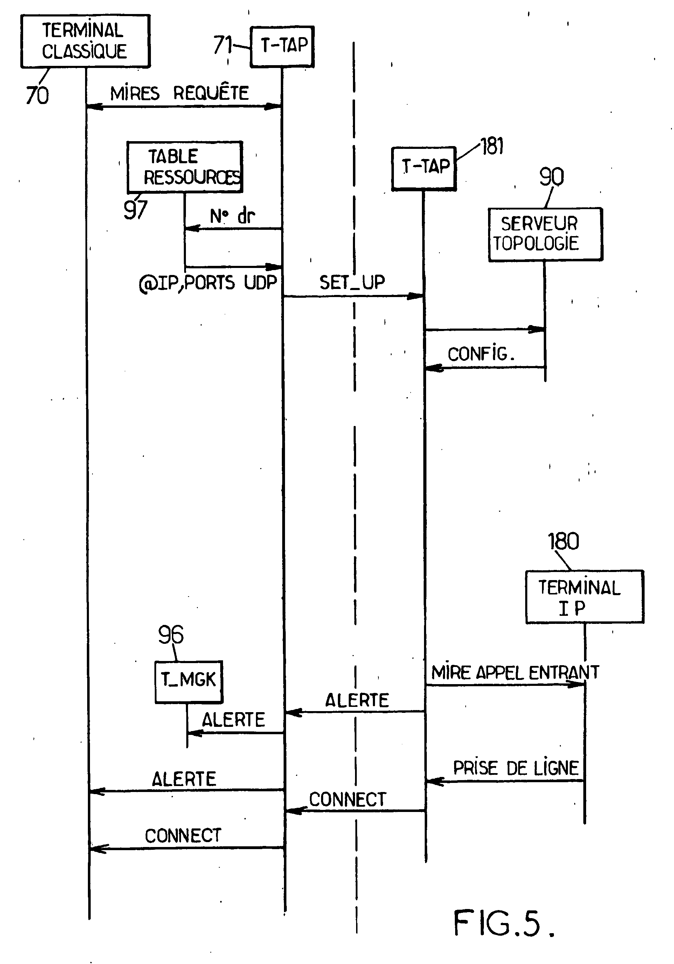

Comme le montrent les figures 4 et 5, la table des ressources 97 est consultée par la tâche de traitement d'appel du coté demandeur avant la diffusion du message d'établissement d'appel (SET_UP). Le demi-appel demandeur peut présenter, le cas échéant, une double apparence du terminal demandeur au demi-appel demandé, ce qui simplifie le processus d'établissement de l'appel en fonction de la configuration désignée par le serveur de topologie, et minimise les recours inutiles aux interfaces passerelles du système.

Un mode de réalisation préféré de l'invention, illustré dans les diagrammes des figures 3 à 7, privilégie l'acquisition d'une double apparence pour les terminaux classiques. Une recherche systématique de double apparence peut être mise en oeuvre, de manière très similaire, pour l'ensemble des terminaux du système, ou uniquement pour les terminaux IP, afin de leur donner une apparence classique.

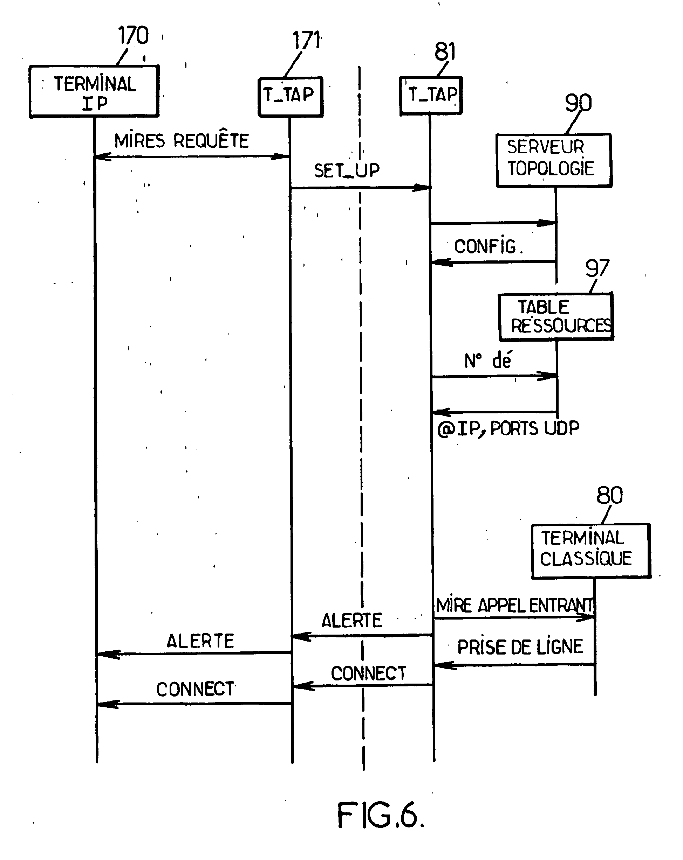

Ainsi, dans les diagrammes des figures 4 à 7, la tâche T_TAP 71, 81 relative au terminal classique interroge, sur la base du numéro d'annuaire du demandeur (figures 4 et 5) ou du demandé (figures 6 et 7), sa table des ressources 97, pour vérifier si une ressource correspondant au type IP n'est pas déjà utilisée pour une communication en cours à laquelle le terminal classique participe. Dans les exemples des figures 4 à 7, la tâche T_TAP concernée vérifie ainsi qu'une interface passerelle n'a pas déjà été réservée pour l'utilisation par le terminal (figures 4 et 5) ou demandé (figures 6 et 7), c'est-à-dire que ce terminal n'a pas déjà pris une apparence IP. Dans l'affirmative, elle dispose immédiatement d'un double jeu de paramètres correspondant à la dualité temporaire des types disponibles pour le terminal, qu'elle peut le cas échéant (figures 4 et 5) transmettre dans le message d'établissement à destination du demi-appel demandé. Dans l'exemple de la figure 5, elle transmet ainsi le numéro d'UCG de l'interface passerelle dans laquelle les ressources de transport de la voix sur IP sont réservées, l'adresse IP et les numéros de ports UDP temporairement alloués au terminal pour sa ou ses communications en cours.

La table des ressources 97 est mise à jour (figures 4 et 7) une fois que le serveur d'appel a présenté l'apparence complémentaire du terminal, afin de rendre disponibles les paramètres en cours d'utilisation pour d'éventuels appels simultanés ultérieurs concernant le terminal.

A la fin de chaque communication, la tâche de traitement d'appel vérifie que le contexte d'appel courant n'est pas le dernier pour le terminal dont elle gère le demi-appel. Si c'est le cas, elle supprime les données de double apparence puisque ces données sont devenues obsolètes étant donné que le terminal ne participe plus à aucune communication et qu'on souhaite minimiser la réservation inutile de ressources dans les passerelles.

Dans le cas d'un appel entre deux terminaux IP 170, 180, la configuration d'appel désignée par le serveur de topologie 90 en réponse à son interrogation peut correspondre au diagramme de la figure 3. Dans cette configuration, la parole codée est échangée entre les terminaux directement sur le réseau IP 54-56. La tâche T_TAP 181, exécutée dans le serveur d'appel (UCG passerelle) du côté arrivée, envoie à l'adresse IP du terminal demandé 180, s'il est disponible, la mire indiquant l'appel entrant, avec l'adresse IP du terminal demandeur 170 et les ports UDP utilisés par celui-ci pour la communication, qu'elle a obtenus dans le message d'établissement. En outre, elle retourne à la tâche T_TAP 171 du demi-appel départ le message d'alerte signalant le début de sonnerie au terminal demandé, avec l'adresse IP du terminal demandé 180 et les ports UDP utilisés par celui-ci pour la communication. Ce message d'alerte est retransmis sous forme d'une mire au terminal demandeur 170, avec l'adresse IP du terminal demandé 180 et les ports UDP utilisés. Lorsque le terminal demandé 180 prend la ligne, l'événement est signalé à la tâche T_TAP 181 qui en informe la tâche T_TAP 171 dans un message de connexion retransmis sous forme d'une mire au terminal demandeur 170. La communication peut alors se dérouler, directement entre les ports UDP pour la partie trafic, et dans le cadre des sessions TCP/IP entre les terminaux et leurs UCG de référence pour la partie signalisation.

Dans le cas où la double apparence peut être présentée pour les terminaux IP, l'émission du message SET_UP par la tâche T_TAP 171 est précédée par une consultation de la table des ressources 97 du serveur d'appel (non représentée sur la figure 3). Le cas échéant, les paramètres relatifs à l'apparence « classique » du terminal 170 (coordonnées d'une ou plusieurs passerelles) sont alors inclus dans le message SET_UP.

Dans le cas d'un appel d'un terminal de type classique 70 vers un terminal IP 180, la configuration d'appel désignée par le serveur de topologie 90 en réponse à son interrogation peut correspondre au diagramme de la figure 4, dans le cas d'un appel initial, et au diagramme de la figure 5, dans le cas d'appels multiples simultanés. De préférence, le serveur de topologie 90 privilégie dans ces deux cas un chemin de communication porté par le réseau IP.

Sur le diagramme de la figure 4, la tâche T_TAP 181 du coté arrivée, qui reçoit la réponse du serveur de topologie, demande la présentation de l'apparence complémentaire par le terminal demandeur, étant donné qu'elle n'a reçu dans le message d'établissement que les paramètres relatifs à ce dernier correspondant à son type classique. Elle adresse pour cela à la tâche T_TAP 71 de l'autre demi-appel un message de requête d'événement (EVENT_REQUEST), dans lequel elle indique la configuration désignée par le serveur de topologie 90.

A réception de ce message lui indiquant qu'une apparence IP est nécessaire, la tâche T_TAP 71 consulte la table de désignation de passerelles 92 sur la base de la localisation (site, UCG) du terminal demandeur 70 pour identifier l'UCG d'au moins une interface passerelle depuis laquelle le terminal demandeur 70 est accessible sans passer par le réseau IP. La tâche T_TAP 71 émet alors un message de demande de réservation de ressource, qu'elle dirige vers la ou les UCG désignée(s) par la table 92. A réception de ce message, la tâche 96 de gestion d'organe passerelle (T_MGK) exécutée par le processeur d'une UCG passerelle concernée examine si l'interface passerelle dispose de ressources pour la communication en cours d'établissement. Dans l'affirmative, elle réserve deux numéros de port UDP pour les liaisons RTP et RTCP, et répond à la tâche 71 en retournant le numéro d'équipement physique de l'interface passerelle disponible, son adresse IP dans le réseau 54-56 et les deux numéros de port UDP réservés.

La tâche 71 émet alors un message EVENT_REPLY à destination de la tâche 181 qui contient les paramètres de transport de la voix sur le réseau IP pour le terminal demandeur, c'est-à-dire le numéro d'équipement physique de l'interface passerelle disponible, son adresse IP dans le réseau et les deux numéros de port UDP réservés qu'elle a reçus de l'UCG passerelle.

Sur le diagramme de la figure 5, la tâche T_TAP 181 du coté arrivée qui reçoit la réponse du serveur de topologie, dispose déjà des paramètres décrivant la double apparence du terminal demandeur puisqu'elle les a reçus dans le message d'établissement SET_UP. Elle dispose ainsi des paramètres nécessaires à l'établissement de la configuration d'appel désignée par le serveur de topologie.

La phase d'établissement de l'appel se poursuit alors dans les deux cas de la façon suivante: la tâche T_TAP 181, exécutée dans l'UCG passerelle du côté arrivée, envoie à l'adresse IP du terminal demandé 180, s'il est disponible, la mire indiquant l'appel entrant, avec l'adresse IP relative au terminal demandeur 70 et les ports UDP utilisés par la passerelle sous cette adresse pour la communication. La tâche T_TAP 181 commande, à l'aide de l'utilitaire GCC, l'établissement d'un chemin de communication dans le réseau de PABX, puis retourne à la tâche T_TAP 71 du demi-appel départ le message d'alerte signalant le début de sonnerie au terminal demandé, avec l'adresse IP du terminal demandé 180 et les ports UDP utilisés par celui-ci pour la communication. Ce message d'alerte est retransmis sous forme d'une mire au terminal demandeur 70 et communiqué à la tâche 96 de gestion de l'interface passerelle, avec l'adresse IP du terminal demandé 180 et les ports UDP utilisés.

La tâche T_MGK 96 de l'UCG de l'interface passerelle complète le chemin de communication coté demandeur en commandant l'interface IP 112, la matrice de commutation 117 et l'interface 111-115 à laquelle est raccordée le terminal afin que les interfaces assurent les traductions requises et que la matrice 117 les fassent communiquer entre elles.

Lorsque le terminal demandé 180 prend la ligne, l'événement est signalé à la tâche T_TAP 181 qui en informe la tâche T_TAP 71 dans un message de connexion (CONNECT) retransmis sous forme d'une mire au terminal demandeur 70. La communication peut alors se dérouler :
- la parole codée en G.711 émise par le terminal classique 70 est acheminée jusqu'à l'interface passerelle au sein d'un ou plusieurs PABX, éventuellement transcodée, puis envoyée sur le réseau IP à l'adresse IP et au port UDP associé au terminal IP demandé :
- le terminal IP 180 envoie sa parole codée sous forme de paquets RTP à destination du port UDP/IP qui lui a été indiqué avec la mire d'appel entrant, et la tâche de gestion d'organe T_MGK de l'interface passerelle destinataire reconstitue le flux de signal de parole codé, opère le cas échéant un transcodage, et retransmet la parole codée en G.711 jusqu'au terminal classique 70 ;
- les tâches T_TAP 71 et 181 (plus précisément les tâches T_MGW et/ou T_MGC) restent en vigueur jusqu'à la fin de la communication, de même que la session TCP/IP transportant la signalisation entre le terminal IP 180 et son UCG de référence.

Dans le cas d'un appel d'un terminal IP 170 vers un terminal de type classique 80, la configuration d'appel désignée par le serveur de topologie 90 en réponse à son interrogation par la tâche 81 du coté arrivée peut correspondre au diagramme de la figure 7 dans le cas d'un appel initial, et au diagramme de la figure 6 dans le cas d'appels multiples simultanés. De préférence, le serveur de topologie 90 privilégie un chemin de communication porté par le réseau IP. La réponse du serveur de topologie équivaut dans ce cas à une requête de prise d'apparence IP pour tout terminal participant à la communication en cours d'établissement qui ne serait pas de type IP.

La tâche de traitement d'appel T_TAP 81 du coté arrivée consulte donc sa table de ressources 97, pour vérifier si une ressource correspondant au type complémentaire du type natif du terminal demandé, en l'occurrence une passerelle IP, n'est pas déjà utilisée pour une communication en cours à laquelle le demandé participe.

Dans l'affirmative (diagramme de la figure 6), elle dispose immédiatement du numéro d'UCG d'une interface passerelle, de l'adresse IP et des numéros de ports UDP temporairement alloués au terminal pour sa communication en cours.

Dans la négative (diagramme de la figure 7), elle consulte la table de désignation de passerelles 92 pour identifier l'UCG d'au moins une interface passerelle depuis laquelle le terminal demandé 80 serait accessible sans quitter le réseau de PABX. Elle émet alors un message de demande de réservation de ressource, qu'elle dirige vers la ou les UCG désignées par la table 92, incluant l'adresse IP du terminal demandeur 170 et les numéros de port UDP qu'il utilise pour les protocoles RTP et RTCP. A réception de ce message, la tâche 96 de gestion d'organe passerelle (T_MGK) exécutée par le processeur d'une UCG passerelle concernée examine si l'interface passerelle dispose de ressources pour la communication en cours d'établissement. Dans l'affirmative, elle réserve deux numéros de port UDP pour les liaisons RTP et RTCP, et répond à la tâche 81 en retournant le numéro d'équipement physique de l'interface passerelle disponible, son adresse IP dans le réseau et les deux numéros de port UDP réservés.

La phase d'établissement de l'appel se poursuit alors dans les deux cas de la façon suivante : la tâche T_TAP 81, exécutée dans l'UCG passerelle du côté arrivée, envoie au terminal demandé 80, s'il est disponible, la mire indiquant l'appel entrant, ainsi que l'indication de l'interface passerelle qui lui est associée. La tâche 81 commande, à l'aide de l'utilitaire GCC, l'établissement d'un chemin de communication. Elle retourne à la tâche T_TAP 171 du demi-appel départ le message d'alerte (ALERT) signalant le début de sonnerie au terminal demandé, message qui fournit à la tâche 171, l'adresse IP et les numéros de ports UDP temporairement alloués au terminal. Ce message d'alerte est retransmis sous forme d'une mire au terminal demandeur 170, dans un ou plusieurs segments TCP/IP adressés au terminal par son UCG de référence, avec l'adresse IP de l'interface passerelle à utiliser et les ports UDP réservés du coté demandé pour la communication.

Lorsque le terminal demandé 80 prend la ligne, l'événement est signalé à la tâche T_TAP 81 qui en informe la tâche T_TAP 171 dans un message de connexion (CONNECT) retransmis sous forme d'une mire au terminal demandeur 170.

La tâche T_MGK de l'UCG de l'interface passerelle complète le chemin de communication coté demandé en commandant l'interface IP 112, la matrice de commutation 117 et l'interface 111-115 à laquelle est raccordée le terminal afin que les interfaces assurent les traductions requises et que la matrice 117 les fasse communiquer entre elles. La communication peut alors se dérouler :
- le terminal IP 170 envoie sa parole codée sous forme de paquets RTP à destination du port UDP/IP qui lui a été indiqué avec la mire d'alerte, et l'interface passerelle destinataire reconstitue le flux de signal de parole codé, opère le cas échéant un transcodage, et retransmet la parole codée en G.711 jusqu'au terminal classique 80 ;
- la parole codée en G.711 émise par le terminal classique 80 est acheminée jusqu'à l'interface passerelle au sein d'un ou plusieurs PABX, éventuellement transcodée, puis envoyée sur le réseau IP au port UDP qui a été spécifié dans le message d'établissement ;
- les tâches T_TAP 171 et 81 (plus précisément les tâches T_MGW et/ou T_MGC) restent en vigueur jusqu'à la fin de la communication, de même que la session TCP/IP transportant la signalisation entre le terminal IP 170 et son UCG de référence.

Dans un autre mode de réalisation de l'invention, la prise de double apparence est effectuée a priori pour un terminal demandeur, c'est-à-dire avant d'avoir connaissance de la configuration d'appel désignée par le serveur de topologie 90. Dans ce cas, la consultation de la table de ressources 97 a lieu dès la réception d'une requête d'établissement d'appel par le serveur d'appel du terminal demandeur, et est immédiatement suivie si nécessaire d'une réservation de ressources par consultation de la table des passerelles 92 et de la tâche T_MGK 96.

Du coté demandé, on peut aussi envisager une prise de double apparence a priori, c'est-à-dire sans avoir connaissance de la configuration d'appel désignée par le serveur de topologie 90. La multiplicité des apparences offertes du coté demandeur et/ou demandé peut éventuellement être prise en compte dans la décision du serveur de topologie.

Dans ce mode de réalisation, il est souhaitable de libérer les ressources réservées a priori et qui s'avèrent inutiles au vu de la configuration d'appel retenue. La tâche de traitement d'appel concernée enverra donc une commande de mise à jour de la table des ressources 97 pour le cas où il n'existe plus aucun contexte d'appel autre que celui de l'appel en cours pour le terminal pour lequel la réservation de ressource a été effectuée.

Il est à noter que l'apparence IP peut être adoptée pour un terminal classique même dans des cas où il communiquerait avec un autre terminal classique. Cela se produit notamment si le chemin de communication passe par une interface passerelle avec le réseau IP, soit parce que les deux terminaux classiques ne peuvent pas se joindre sans passer par le réseau IP, soit parce que cela a été imposé par le serveur de topologie.

## Revendications

1. Procédé d'établissement de chemins de communication entre des points d'accès d'un système de commutation, le système de commutation comprenant un réseau de transmission de paquets (54-56) procurant une première famille de points d'accès, des moyens de commutation (10, 20, 30, 40) équipés d'interfaces de raccordement procurant une seconde famille de points d'accès et d'au moins une interface passerelle avec le réseau de transmission de paquets, et des moyens de traitement d'appel pour mémoriser des données de configuration et des données de contexte relatives à des terminaux reliés au système à travers les points d'accès, et pour effectuer des traitements de signalisation concernant lesdits terminaux,
dans lequel l'établissement d'un premier chemin de communication entre des points d'accès pour mettre en liaison des premier et second terminaux respectivement reliés auxdits points d'accès comprend les étapes suivantes lorsque le premier chemin comporte au moins une première portion appartenant au réseau de transmission de paquets (54-56) et une seconde portion appartenant aux moyens de commutation (10, 20, 30, 40) avec une interface passerelle, (112) entre lesdites première et seconde portions :
- associer à ladite première portion une ressource d'adressage de l'interface passerelle dans le réseau de transmission de paquets pour la liaison avec le premier terminal ;
- associer à ladite seconde portion une ressource d'adressage de l'interface passerelle dans les moyens de commutation pour la liaison avec le second terminal ;
- mémoriser, dans les données de contexte relatives au second terminal, une identification de ladite ressource d'adressage de l'interface passerelle dans le réseau de transmission de paquets.

2. Procédé selon la revendication 1, dans lequel pour mettre en liaison le second terminal avec un troisième terminal sans couper la liaison avec le premier terminal, on lit dans les données de contexte relatives au second terminal l'identification mémorisée de ladite ressource d'adressage de l'interface passerelle dans le réseau de transmission de paquets (54-56), et on établit un second chemin de communication incluant la seconde portion du premier chemin et au moins une autre portion appartenant au réseau de transmission de paquets, à laquelle on associe la ressource d'adressage lue de l'interface passerelle pour la liaison avec le troisième terminal.

3. Procédé selon l'une quelconque des revendications précédentes, dans lequel l'établissement du premier chemin de communication comprend la mémorisation, dans les données de contexte relatives au premier terminal, d'une identification de ladite ressource d'adressage de l'interface passerelle (112) dans les moyens de commutation (10, 20, 30, 40).

4. Procédé selon l'une quelconque des revendications précédentes, dans lequel le réseau de transmission de paquets (54-56) fonctionne selon le protocole IP et ladite ressource d'adressage de l'interface passerelle (112) dans le réseau de transmission de paquets comporte une adresse IP de l'interface passerelle dans le réseau et au moins un numéro de port UDP réservé en relation avec ladite adresse IP.

5. Procédé d'établissement de chemins de communication entre des points d'accès d'un système de commutation, le système de commutation comprenant un réseau de transmission de paquets (54-56) procurant une première famille de points d'accès, des moyens de commutation (10, 20, 30, 40) équipés d'interfaces de raccordement procurant une seconde famille de points d'accès et d'au moins une interface passerelle avec le réseau de transmission de paquets, et des moyens de traitement d'appel pour mémoriser des données de configuration et des données de contexte relatives à des terminaux reliés au système à travers les points d'accès, et pour effectuer des traitements de signalisation concernant lesdits terminaux,
dans lequel l'établissement d'un premier chemin de communication entre des points d'accès pour mettre en liaison des premier et second terminaux respectivement reliés auxdits points d'accès comprend les étapes suivantes lorsque le premier chemin comporte au moins une première portion appartenant au réseau de transmission de paquets (54-56) et une seconde portion appartenant aux moyens de commutation (10, 20, 30, 40) avec une interface passerelle (112) entre lesdites première et seconde portions :
- associer à ladite première portion une ressource d'adressage de l'interface passerelle dans le réseau de transmission de paquets pour la liaison avec le premier terminal ;
- associer à ladite seconde portion une ressource d'adressage de l'interface passerelle dans les moyens de commutation pour la liaison avec le second terminal ;
- mémoriser, dans les données de contexte relatives au premier terminal, une identification de ladite ressource d'adressage de l'interface passerelle dans les moyens de commutation.

6. Procédé selon la revendication 5, dans lequel pour mettre en liaison le premier terminal avec un troisième terminal sans couper la liaison avec le second terminal, on lit dans les données de contexte relatives au premier terminal l'identification mémorisée de ladite ressource d'adressage de l'interface passerelle (112) dans les moyens de commutation (10, 20, 30, 40), et on établit un second chemin de communication incluant la première portion du premier chemin et au moins une autre portion appartenant aux moyens de commutation, à laquelle on associe la ressource d'adressage lue de l'interface passerelle pour la liaison avec le troisième terminal.

7. Procédé selon la revendication 5 ou 6, dans lequel ladite ressource d'adressage de l'interface passerelle (112) dans les moyens de commutation (10, 20, 30, 40) comporte une adresse physique de ladite interface dans les moyens de commutation.

8. Procédé selon l'une quelconque des revendications précédentes, dans lequel les moyens de traitement d'appel du système de commutation comprennent au moins un serveur d'appel associé à certains au moins des terminaux, dans lequel les moyens de traitement d'appel interrogent un gestionnaire de configuration d'appel (90) pour obtenir des données de configuration d'appel en réponse à deux jeux de paramètres relatifs à des terminaux demandeur et demandé, respectivement, ledit jeu de paramètres relatifs à un terminal incluant une indication de la famille du point d'accès auquel il est relié, lesdites données de configuration d'appel indiquant si le chemin de communication à établir comporte une interface passerelle.

9. Procédé selon la revendication 8, comprenant les étapes suivantes pour établir une communication entre des terminaux demandeur et demandé:
- création d'une première tâche de traitement d'appel (71, 171) dans le serveur d'appel associé au terminal demandeur (70, 170) ;
- formation, par la première tâche de traitement d'appel, d'un message d'établissement incluant au moins un numéro du terminal demandé et l'indication de la famille du point d'accès auquel est relié le terminal demandeur ;
- en réponse à la réception dudit message d'établissement, création d'une seconde tâche de traitement d'appel (81, 181) dans le serveur d'appel associé au terminal demandé (80, 180) ;
- interrogation du gestionnaire de configuration par la seconde tâche de traitement d'appel, sur la base d'un jeu de paramètres relatifs au terminal demandeur extraits du message d'établissement et d'un jeu de paramètres relatifs au terminal demandé déduits par la seconde tâche de traitement d'appel à partir du numéro reçu dans le message d'établissement ; et
- définition du chemin de communication entre les points d'accès auxquels sont reliés les terminaux demandeur et demandé conformément aux données de configuration d'appel obtenues du gestionnaire de configuration.

10. Procédé selon la revendication 9, dans lequel le message d'établissement inclut l'identification d'une ressource d'adressage d'interface passerelle mémorisée dans les données de contexte relatives au terminal demandeur.

11. Procédé selon la revendication 9, dans lequel, lorsque les données de configuration d'appel obtenues du gestionnaire de configuration (90) indiquent que le chemin de communication à établir comporte une interface passerelle (112), la seconde tâche de traitement d'appel (81, 181) adresse une requête à la première tâche de traitement d'appel (71, 171) pour qu'elle lui retourne l'identification d'une ressource d'adressage de l'interface passerelle.

12. Système de commutation comprenant un réseau de transmission de paquets (54-56) procurant une première famille de points d'accès, des moyens de commutation (10, 20, 30, 40) équipés d'interfaces de raccordement procurant une seconde famille de points d'accès et d'au moins une interface passerelle avec le réseau de transmission de paquets, et des moyens de traitement d'appel pour mémoriser des données de configuration et des données de contexte relatives à des terminaux reliés au système à travers les points d'accès, et pour effectuer des traitements de signalisation concernant lesdits terminaux conformément à un procédé selon l'une quelconque des revendications précédentes.

## Claims

1. A method for setting up communication paths between access points of a switching system, the switching system comprising a packet transmission network (54-56) affording a first family of access points, switching means (10, 20, 30, 40) equipped with linking interfaces affording a second family of access points and with at least one gateway interface with the packet transmission network, and call processing means for storing configuration data and context data relating to terminals connected to the system through the access points, and for performing signalling processing relating to said terminals,
wherein the setting up of a first communication path between access points so as to connect up first and second terminals respectively connected to said access points comprises the following steps when the first path comprises at least one first portion belonging to the packet transmission network (54-56) and one second portion belonging to the switching means (10, 20, 30, 40) with a gateway interface (112) between said first and second portions:
- associating with said first portion an addressing resource of the gateway interface in the packet transmission network for the connection with the first terminal;
- associating with said second portion an addressing resource of the gateway interface in the switching means for the connection with the second terminal;
- storing, in the context data relating to the second terminal, an identification of said addressing resource of the gateway interface in the packet transmission network.

2. The method as claimed in claim 1, wherein in order to connect up the second terminal with a third terminal without cutting the connection with the first terminal, the stored identification of said addressing resource of the gateway interface in the packet transmission network (54-56) is read from the context data relating to the second terminal, and a second communication path is set up including the second portion of the first path and at least one other portion belonging to the packet transmission network, with which is associated the read addressing resource of the gateway interface for the connection with the third terminal.

3. The method as claimed in any one of the preceding claims, wherein the setting up of the first communication path comprises the storage, in the context data relating to the first terminal, of an identification of said addressing resource of the gateway interface (112) in the switching means (10, 20, 30, 40).

4. The method as claimed in any one of the preceding claims, wherein the packet transmission network (54-56) operates according to the IP protocol and said addressing resource of the gateway interface (112) in the packet transmission network comprises an IP address of the gateway interface in the network and at least one UDP port number reserved in conjunction with said IP address.

5. A method of setting up communication paths between access points of a switching system, the switching system comprising a packet transmission network (54-56) affording a first family of access points, switching means (10, 20, 30, 40) equipped with linking interfaces affording a second family of access points and with at least one gateway interface with the packet transmission network, and call processing means for storing configuration data and context data relating to terminals connected to the system through the access points, and for performing signalling processing relating to said terminals, wherein the setting up of a first communication path between access points so as to connect up first and second terminals respectively connected to said access points comprises the following steps when the first path comprises at least one first portion belonging to the packet transmission network (54-56) and one second portion belonging to the switching means (10, 20, 30, 40) with a gateway interface (112) between said first and second portions:
- associating with said first portion an addressing resource of the gateway interface in the packet transmission network for the connection with the first terminal;
- associating with said second portion an addressing resource of the gateway interface in the switching means for the connection with the second terminal;
- storing, in the context data relating to the first terminal, an identification of said addressing resource of the gateway interface in the switching means.

6. The method as claimed in claim 5, wherein in order to connect up the first terminal with a third terminal without cutting the connection with the second terminal, the stored identification of said addressing resource of the gateway interface (112) in the switching means (10, 20, 30, 40) is read from the context data relating to the first terminal, and a second communication path is set up including the first portion of the first path and at least one other portion belonging to the switching means, with which is associated the read addressing resource of the gateway interface for the connection with the third terminal.

7. The method as claimed in claim 5 or 6, wherein said addressing resource of the gateway interface (112) in the switching means (10, 20, 30, 40) comprises a physical address of said interface in the switching means.

8. The method as claimed in any one of the preceding claims, wherein the call processing means of the switching system comprise at least one call server associated with certain at least of the terminals, wherein the call processing means interrogate a call configuration manager (90) to obtain call configuration data in response to two sets of parameters relating to requester and requested terminals, respectively, said set of parameters relating to a terminal incorporating an indication of the family of the access point to which it is connected, said call configuration data indicating whether the communication path to be set up comprises a gateway interface.

9. The method as claimed in claim 8, comprising the following steps for setting up a communication between requester and requested terminals:
- creation of a first call processing task (71, 171) in the call server associated with the requester terminal (70, 170);
- formation, by the first call processing task, of a setup message including at least one number of the requested terminal and the indication of the family of the access point to which the requester terminal is connected;
- in response to the receipt of said setup message, creation of a second call processing task (81, 181) in the call server associated with the requested terminal (80, 180);
- interrogation of the configuration manager by the second call processing task, on the basis of a set of parameters relating to the requester terminal which are extracted from the set up message and a set of parameters relating to the requested terminal which are deduced by the second call processing task from the number received in the setup message; and
- definition of the communication path between the access points to which the requester and requested terminals are connected in accordance with the call configuration data obtained from the configuration manager.

10. The method as claimed in claim 9, wherein the setup message includes the identification of a gateway interface addressing resource stored in the context data relating to the requester terminal.

11. The method as claimed in claim 9, wherein, when the call configuration data obtained from the configuration manager (90) indicate that the communication path to be set up comprises a gateway interface (112), the second call processing task (81, 181) addresses a request to the first call processing task (71, 171) so that it returns the identification of an addressing resource of the gateway interface to it.

12. A switching system comprising a packet transmission network (54-56) affording a first family of access points, switching means (10, 20, 30, 40) equipped with linking interfaces affording a second family of access points and with at least one gateway interface with the packet transmission network, and call processing means for storing configuration data and context data relating to terminals connected to the system through the access points, and for performing signal processing relating to said terminals in accordance with a method according to any one of the preceding claims.

## Patentansprüche

1. Verfahren zur Herstellung von Verbindungswegen zwischen Zugriffspunkten eines Schaltsystems, wobei das Schaltsystem ein Paketübertragungsnetz (54-56), das eine erste Familie von Zugriffspunkten liefert, Schaltmittel (10, 20, 30, 40), die mit Anschlussschnittstellen, die eine zweite Familie von Zugriffspunkten liefern, und mit mindestens einer Brückenschnittstelle zum Paketübertragungsnetz versehen sind, und Rufbearbeitungsmittel umfasst, um Konfigurationsdaten und Kontextdaten zu Terminals, die mit dem System über Zugriffspunkte verbunden sind, zu speichern und Anzeigbearbeitungen, die diese Terminals betreffen, durchzuführen,
bei dem die Herstellung eines ersten Verbindungsweges zwischen Zugriffspunkten zur Verbindung des ersten und zweiten Terminals, die jeweils mit den Zugriffspunkten verbunden sind, die folgenden Schritte umfasst, wenn der erste Weg mindestens einen ersten Abschnitt, der dem Paketübertragungsnetz (54-56) angehört, und einen zweiten Abschnitt, der den Schaltmitteln (10, 20, 30, 40) angehört, mit einer Brückenschnittstelle (112) zwischen dem ersten und dem zweiten Abschnitt umfasst:
- Verbinden des ersten Abschnitts mit einer Ressource zum Adressieren der Brückenschnittstelle im Paketübertragungsnetz für die Verbindung mit dem ersten Terminal;
- Verbinden des zweiten Abschnitts mit einer Ressource zum Adressieren der Brückenschnittstelle in den Schaltmitteln für die Verbindung mit dem zweiten Terminal;
- Speichern einer Identifikation der Ressource zum Adressieren der Brückenschnittstelle in dem Paketübertragungsnetz in den Kontextdaten zum zweiten Terminal.

2. Verfahren nach Anspruch 1, bei dem zur Verbindung des zweiten Terminals mit einem dritten Terminal ohne Unterbrechung der Verbindung mit dem ersten Terminal in den Kontextdaten zum zweiten Terminal die gespeicherte Identifikation der Ressource zum Adressieren der Brückenschnittstelle im Paketübertragungsnetz (54-56) abgelesen und ein zweiter Verbindungsweg hergestellt wird, der den zweiten Abschnitt des ersten Weges und mindestens einen weiteren Abschnitt einschließt, der dem Paketübertragungsnetz angehört, mit dem die abgelesene Ressource zum Adressieren der Brückenschnittstelle für die Verbindung mit dem dritten Terminal verbunden ist.

3. Verfahren nach einem der vorhergehenden Ansprüche, bei dem die Herstellung des ersten Verbindungsweges die Speicherung einer Identifikation der Ressource zum Adressieren der Brückenschnittstelle (112) in den Schaltmitteln (10, 20, 30, 40) in den Kontextdaten zum ersten Terminal umfasst.

4. Verfahren nach einem der vorhergehenden Ansprüche, bei dem das Paketübertragungsnetz (54-56) nach dem IP-Protokoll funktioniert, und die Ressource zum Adressieren der Brückenschnittstelle (112) im Paketübertragungsnetz eine IP-Adresse der Brückenschnittstelle im Netz und mindestens eine reservierte UDP-Anschlussnummer in Verbindung mit der IP-Adresse umfasst.

5. Verfahren zur Herstellung von Verbindungswegen zwischen Zugriffspunkten eines Schaltsystems, wobei das Schaltsystem ein Paketübertragungsnetz (54-56), das eine erste Familie von Zugriffspunkten liefert, Schaltmittel (10, 20, 30, 40), die mit Anschlussschnittstellen, die eine zweite Familie von Zugriffspunkten liefern, und mit mindestens einer Brückenschnittstelle zum Paketübertragungsnetz versehen sind, und Rufbearbeitungsmittel umfasst, um Konfigurationsdaten und Kontextdaten zu Terminals, die mit dem System über Zugriffspunkte verbunden sind, zu speichern und Anzeigbearbeitungen, die diese Terminals betreffen, durchzuführen,
bei dem die Herstellung eines ersten Verbindungsweges zwischen Zugriffspunkten zur Verbindung des ersten und zweiten Terminals, die jeweils mit den Zugriffspunkten verbunden sind, die folgenden Schritte umfasst, wenn der erste Weg mindestens einen ersten Abschnitt, der dem Paketübertragungsnetz (54-56) angehört, und einen zweiten Abschnitt, der den Schaltmitteln (10, 20, 30, 40) angehört, mit einer Brückenschnittstelle (112) zwischen dem ersten und dem zweiten Abschnitt umfasst:
- Verbinden des ersten Abschnitts mit einer Ressource zum Adressieren der Brückenschnittstelle im Paketübertragungsnetz für die Verbindung mit dem ersten Terminal;
- Verbinden des zweiten Abschnitts mit einer Ressource zum Adressieren der Brückenschnittstelle in den Schaltmitteln für die Verbindung mit dem zweiten Terminal;
- Speichern einer Identifikation der Ressource zum Adressieren der Brückenschnittstelle in den Schaltmitteln in den Kontextdaten zum zweiten Terminal.

6. Verfahren nach Anspruch 5, bei dem zur Verbindung des ersten Terminals mit einem dritten Terminal ohne Unterbrechung der Verbindung mit dem zweiten Terminal in den Kontextdaten zum ersten Terminal die gespeicherte Identifikation der Ressource zum Adressieren der Brückenschnittstelle (112) in den Schaltmitteln (10, 20, 30, 40) abgelesen und ein zweiter Verbindungsweg hergestellt wird, der den zweiten Abschnitt des ersten Weges und mindestens einen weiteren Abschnitt einschließt, der den Schaltmitteln angehört, mit dem die abgelesene Ressource zum Adressieren der Brückenschnittstelle für die Verbindung mit dem dritten Terminal verbunden ist.

7. Verfahren nach Anspruch 5 oder 6, bei dem die Ressource zum Adressieren der Brückenschnittstelle (112) in den Schaltmitteln (10, 20, 30, 40) eine physische Adresse der Schnittstelle in den Schaltmitteln umfasst.

8. Verfahren nach einem der vorhergehenden Ansprüche, bei dem die Rufbearbeitungsmittel des Schaltsystems mindestens einen Rufserver in Verbindung mit zumindest gewissen der Terminals umfassen, bei dem die Rufbearbeitungsmittel eine Rufkonfigurationssteuerung (90) befragen, um Rufkonfigurationsdaten als Antwort auf zwei Sätze von Parametern zu erhalten, die sich auf die abfragenden bzw. abgefragten Terminals beziehen, wobei der Satz von Parametern zu einem Terminal eine Angabe der Familie des Zugriffspunktes, mit dem es verbunden ist, einschließt, wobei die Rufkonfigurationsdaten angeben, ob der herzustellende Verbindungsweg eine Brückenschnittstelle umfasst.

9. Verfahren nach Anspruch 8, umfassend die folgenden Schritte, um eine Verbindung zwischen dem abfragenden und dem abgefragten Terminal herzustellen:
- Erstellung einer ersten Rufbearbeitungsaufgabe (71, 171) im Rufserver, der dem abfragenden Terminal (70, 170) zugeordnet ist,
- mit der ersten Rufbearbeitungsaufgabe Bildung einer Herstellungsmeldung, die mindestens eine Nummer des abgefragten Terminals und die Angabe der Familie des Zugriffspunktes, mit dem das abfragende Terminal verbunden ist, einschließt,
- als Antwort auf den Erhalt einer Herstellungsmeldung Erstellung einer zweiten Rufbearbeitungsaufgabe (81, 181) im Rufserver, der dem abgefragten Terminal (80, 180) zugeordnet ist;
- Abfrage der Konfigurationssteuerung durch die zweite Rufbearbeitungsaufgabe auf Basis eines Satzes von Parametern zum abfragenden Terminal, die der Herstellungsmeldung entnommen wurden, und eines Satzes von Parametern zum abgefragten Terminal, die von der zweiten Rufbearbeitungsaufgabe aus der in der Herstellungsmeldung erhaltenen Nummer abgeleitet werden, und
- Definition des Verbindungsweges zwischen den Zugriffspunkten, mit denen das abfragende und abgefragte Terminal verbunden sind, gemäß den Rufkonfigurationsdaten, die von der Konfigurationssteuerung erhalten werden.

10. Verfahren nach Anspruch 9, bei dem die Herstellungsmeldung die Identifikation einer Ressource zum Adressieren einer Brückenschnittstelle, die in den Kontextdaten zum abfragenden Terminal gespeichert ist, einschließt.

11. Verfahren nach Anspruch 9, bei dem, wenn die Rufkonfigurationsdaten, die von der Konfigurationssteuerung (90) erhalten werden, angeben, dass der herzustellende Verbindungsweg eine Brückenschnittstelle (112) umfasst, die zweite Rufbearbeitungsaufgabe (81, 181) eine Anfrage an die erste Rufbearbeitungsaufgabe (71, 171) adressiert, damit sie ihr die Identifikation einer Ressource zum Adressieren einer Brückenschnittstelle zurücksendet.

12. Schaltsystem, umfassend ein Paketübertragungssystem (54-56), das eine erste Familie von Zugriffspunkten liefert, Schaltmittel (10, 20, 30, 40), die mit Anschlussschnittstellen, die eine zweite Familie von Zugriffspunkten liefern, und mit mindestens einer Brückenschnittstelle zum Paketübertragungsnetz versehen sind, und Rufbearbeitungsmittel umfasst, um Konfigurationsdaten und Kontextdaten zu Terminals, die mit dem System über die Zugriffspunkte verbunden sind, zu speichern und Anzeigbearbeitungen, die diese Terminals betreffen, gemäß einem Verfahren nach einem der vorhergehenden Ansprüche durchzuführen.
